Europäisches Patentamt

(19) European Patent Office

Office européen des brevets

(11) Numéro de publication: **0 181 797**
**B1**

(12) # FASCICULE DE BREVET EUROPÉEN

(45) Date de publication du fascicule du brevet:
27.04.88

(51) Int. Cl.⁴: **B 62 D 5/083**

(21) Numéro de dépôt: **85402011.2**

(22) Date de dépôt: **16.10.85**

(54) **Distributeur rotatif hydraulique, plus particulièrement pour mécanisme de direction assistée.**

(30) Priorité: **29.10.84 ES 537458**

(43) Date de publication de la demande:
**21.05.86 Bulletin 86/21**

(45) Mention de la délivrance du brevet:
**27.04.88 Bulletin 88/17**

(84) Etats contractants désignés:
**DE FR GB IT**

(56) Documents cité:
**EP-A-0 077 710**
**EP-A-0 095 415**
**DE-A-2 242 020**
**US-A-3 227 178**

(73) Titulaire: **BENDIX ESPANA S.A., Balmes 243,
Barcelona 6 (ES)**

(72) Inventeur: **Estela Rosell, Jorge, c/Escornalbou 23
1ò 1a, Barcelona 26 (ES)**
Inventeur: **Montornes Folch, Carlos, Avda. Pomar
8, 3ò, 2a, Badalona Barcelona (ES)**

(74) Mandataire: **Le Moenner, Gabriel, Division
Technique Service Brevets Bendix Europe 126,
rue de Stalingrad, F-93700 Drancy (FR)**

## Description

La présente invention concerne un distributeur hydraulique rotatif, plus particulièrement pour mécanisme de direction assistée de véhicule automobile, du type comprenant, dans un boîtier, un premier et un second éléments de valve rotative respectivement solidaires en rotation d'un arbre d'entrée et d'un arbre de sortie coaxiaux, les deux éléments de valve coopérant mutuellement pour former sélectivement des trajets de fluide entre une source de fluide sous pression, les compartiments respectifs d'un moteur hydraulique d'assistance et un réservoir en fonction de la position angulaire relative des deux éléments de valve de part et d'autre d'une position centrale de repos, le premier élément de valve étant constitué d'un rotor discoïdal en étoile dont les bras sont formés avec des lumières fermées périphériquement et délimitées chacune latéralement (relativement aux sens de rotation) par des portions de voile sensiblement radiales du bras correspondant, le rotor coopérant en contact coulissant par ses faces axiales opposées avec des faces axiales adjacentes en vis à vis du second élément de valve, dans lesquelles débouchent, d'une part, au droit desdites portions de voile, des ouvertures de distribution destinées à être reliées aux compartiments du moteur hydraulique, et d'autre part, au droit des lumières des bras du rotor, des ouvertures de retour de fluide vers le réservoir, et un dispositif élastique de rappel et de centrage des arbres d'entrée et de sortie comprenant au moins un ressort en C disposé autour de l'arbre d'entrée et un premier et un second moyens de liaison associant respectivement les arbres d'entrée et de sortie aux extrémités en regard du ressort en C.

Un distributeur de ce type est décrit dans le document EP-A-0 095 415. L'agencement d'éléments de valve de ce distributeur permet de s'affranchir des problèmes d'étanchéité périphérique du premier élément de valve ou rotor en étoile, et d'intégrer les organes de solidarisation en rotation des différentes pièces axialement juxtaposées constitutives du second élément de valve à l'intérieur du cercle périphérique du rotor. Dans ce document, les moyens élastiques de rappel de centrage entre les arbres d'entrée et de sortie (et, partant, entre les premier et second éléments de distributeur) sont constitués par au moins un ressort en C agencé entre une partie de prolongation interne de l'arbre d'entrée et l'arbre de sortie, dans un agencement imposant une longueur axiale importante pour l'ensemble du distributeur.

La présente invention a pour objet de proposer un distributeur hydraulique du type précité, de structure simplifiée, notamment en ce qui concerne la réalisation des conduits de passage de fluide et de l'accouplement à course morte entre les éléments de distributeur, permettant une réduction importante des dimensions axiales du distributeur et autorisant diverses adaptations relatives aux moyens de rappel de centrage et d'accouplement à course morte, dans un agencement général de conception robuste, de faibles coûts de fabrication et présentant une fiabilité et une souplesse d'utilisation accrues.

Pour ce faire, selon l'invention, le ressort en C est disposé autour du rotor en étoile, le premier moyen de liaison étant constitué par une partie d'au moins un des bras du rotor en étoile s'étendant radialement vers l'extérieur entre les extrémités en regard du ressort en C, le second moyen de liaison étant constitué par au moins une partie extérieure en saillie du deuxième élément de valve s'étendant au voisinage du premier moyen de liaison, les extrémités du ressort en C comportant des zones d'appui arrières susceptibles de coopérer en appui avec des butées extérieures du second élément de valve pour réaliser un accouplement à course morte entre les premier et second éléments de valve.

Avec un tel agencement, le ressort en C de rappel de centrage et d'accouplement a course morte coopère directement, dans un agencement particulièrement compact, avec le rotor discoïdal du distributeur et avec le second élément de distributeur, dont la structure et la réalisation sont simplifiées.

Le document US-A-3 227 178 décrit, pour sa part, un distributeur hydraulique rotatif du type valve à glace comportant deux éléments de distributeur discoïdaux coopérant l'un avec l'autre par leurs faces adjacentes et montés à coulissement en rotation entre deux portions de boîtier comportant les canalisations d'amenée et de distribution de fluide. Les deux éléments de distributeur sont entourés par un ressort en C unique de centrage et de rappel dont les extrémités coopèrent avec des saillies adjacentes des éléments de distributeur, l'accouplement à course morte entre ces derniers étant réalisé par un accouplement à cannelures lâche entre les arbres d'entrée et de sortie, dans un agencement de montage et de fonctionnement délicats et d'encombrement axial important.

D'autres caractéristiques et avantages de la présente invention ressortiront de la description suivante de modes de réalisation, donnés à titre illustratif mais nullement limitatif, faite en relation avec les dessins annexes, sur lesquels:
- La Figure 1 est une vue en coupe schématique longitudinale d'un premier mode de réalisation d'un distributeur hydraulique selon l'invention ;
- La Figure 2 est une vue schématique en coupe transversale selon le plan II-II de la Figure 1 ;
- La figure 3 est une vue schématique partielle du dessus de l'équipage représenté sur la Figure 2 ;
- La Figure 4 est une vue en perspective du ressort en C du mode de réalisation des Figures 1 à 3 ;
- La Figure 5 est une vue en coupe longitudinale similaire à celle de la figure 1 et montrant un deuxième mode de réalisation de l'invention ;

- Les Figures 6 et 7 sont des vues similaires aux Figures 2 et 3 relatives à ce deuxième mode de réalisation ; et

- La Figure 8 est une vue en bout suivant le plan 8-8 de la pièce du second élément de distributeur solidaire de l'arbre de sortie.

Dans la description qui va suivre, les éléments identiques ou analogues purtent les mêmes chiffres de référence, éventuellement indicés.

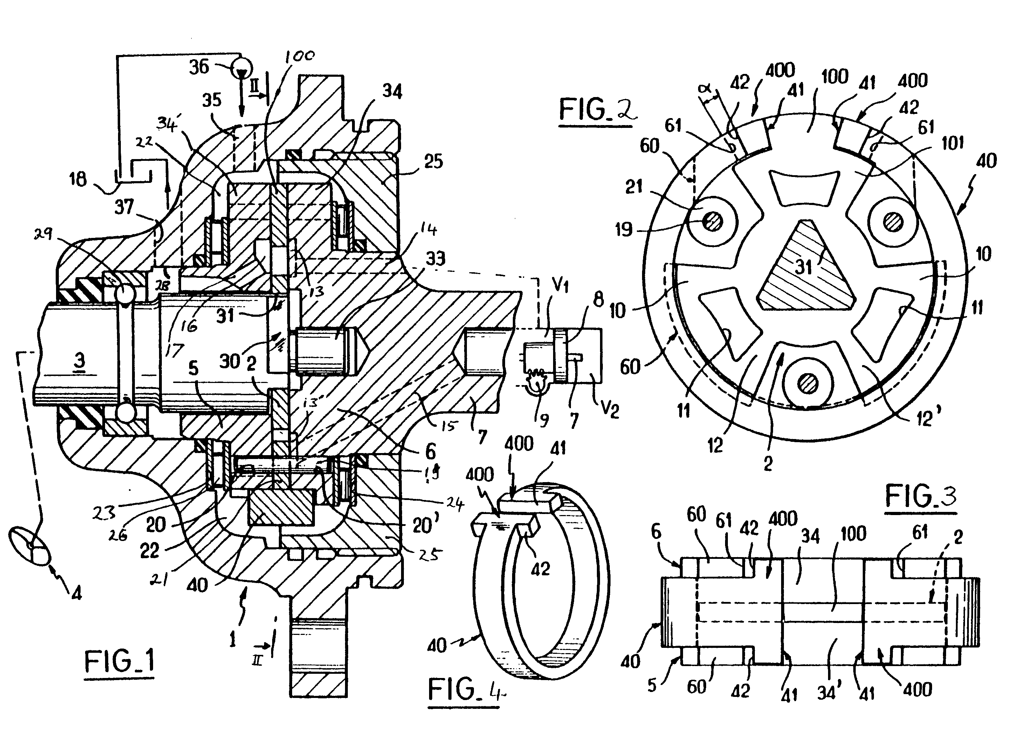

On a représenté sur la Figure 1 l'extrémité d'un mécanisme de direction assistée comprenant essentiellement, dans un boîtier 1, un distributeur hydraulique comportant un premier élément de valve constitué, en l'occurrence, d'un rotor discoïdal en étoile 2 couplé en rotation à un arbre d'entrée 3 destiné typiquement à être relié à un volant de direction 4 d'un véhicule automobile, et un second élément de distributeur 5 - 6 solidaire en rotation d'un arbre de sortie 7 associé typiquement, par une liaison à écrou à billes, à un piston 8 d'un cylindre d'assistance engrenant avec un pignon de sortie 9 relié à un embiellage de commande des roues directrices du véhicule.

Le second élément de valve est constitué de deux pièces concentriques 5 et 6 espacées axialement et assemblées pour être solidaires en rotation l'une de l'autre en définissant, entre leurs faces axiales parallèles en vis à vis, un espace dans lequel le rotor en étoile 2 est reçu à coulissement en rotation. Conformément à la structure générale de valve décrite dans le document EP-A-0 085 415 sus-mentionné, dont le contenu est suppose intégré ici pour référence, le rotor 2 comprend typiquement, dans l'exemple représenté, trois bras s'étendant radialement vers l'extérieur 10, chaque bras 10 étant formé avec une lumière 11 fermée périphériquement et délimitée latéralement par des portions de voile sensiblement radiales 12 du bras correspondant. Le second élément de valve (en l'occurrence la pièce 6) est formé, dans sa face axiale coopérant avec le rotor 2, avec des ouvertures de distribution 13, 13' de forme sensiblement trapézoïdale disposées, dans la configuration normale de repos centrée des deux éléments de valve, en regard des portions de voile 12 des bras 10 du rotor, ces ouvertures de distribution 13, 13' étant reliées respectivement par des canaux tels que 14 et 15 aux compartiments respectifs $V_1$ et $V_2$ du cylindre d'assistance intégrant le piston 8. Le second élément de valve (en l'occurence l'autre pièce 5) comporte, dans sa face axiale coopérant avec le rotor 2, des ouvertures de retour 16 communiquant en permanence avec les lumières 11 des bras 10 du rotor 2, ces ouvertures de retour 16 communiquant, via des passages tels que 17, avec un réservoir 18.

Dans le mode de réalisation représenté, les deux pièces 5 et 6 du second élément de valve sont couplées l'une à l'autre en rotation par des pions axiaux 19 reçus dans des alésages alignés 20, 20' des pièces 5 et 6, les pions 19 s'étendant chacun au travers d'une rondelle d'entretoisement 21 de même épaisseur que le rotor discoïdé 2, les rondelles d'entretoisement 21 étant disposées dans l'espace entre deux bras adjacents du rotor 2, radialement à l'intérieur du cercle périphérique normal des bras 10 du rotor 2. Dans le mode de réalisation représenté, la pièce 6 est formée par un évasement d'extrémité de l'arbre de sortie 7, le distributeur étant disposé dans une chambre interne 22 du boîtier 1 délimitée axialement entre deux parois frontales en regard 23 et 24, respectivement, du boîtier 1 et d'un couvercle 25 coaxial à l'arbre de sortie 7 et rapporté de façon étanche sur le boîtier 1, les pièces 5 et 6 du second élément de valve étant positionnées et guidées en rotation entre la paroi du boîtier 1 et le couvercle 25 par des roulements axiaux 26.

On notera, en outre, que la pièce 6 est guidée à rotation dans un alésage 27 du couvercle 25, la pièce 5 comportant une partie de manchon concentrique à l'arbre d'entrée 3 et reçue a rotation dans un alésage étagé 28 du boîtier 1 dans lequel est également disposé un roulement 29 pour l'arbre d'entrée 3.

Dans le mode de réalisation de la Figure 1, l'arbre d'entrée 3 comporte une partie intermédiaire 30 à section triangulaire emmanchée dans une ouverture triangulaire correspondante 31 du moyeu du rotor en étoile 2. L'arbre d'entrée 3 comporte une extrémité cylindrique de diamètre réduit 33 reçue dans un alésage coaxial de la pièce 6.

Conformément à un aspect de l'invention, l'un des bras ($10_1$) du rotor 2 comporte, dans l'exemple représenté, une partie 100 s'étendant en saillie vers l'extérieur au-delà du cercle périphérique normal des bras 10, entre deux parties extérieures en saillie 34 et 34' des pièces 6 et 5 du second élément de valve, respectivement, les flancs latéraux des saillies 100 et 34 - 34' s'étendant au repos sensiblement dans deux mêmes plans symétriques par rapport au plan de coupe de la Figure 1.

Comme représenté sur la Figure 1, on notera que les passages de distribution de fluide 14 et 15 vers les chambres $V_1$ et $V_2$ du cylindre d'assistance sont formés directement dans l'arbre de sortie 7 et sa partie d'extrémité évasée formant la pièce 6, le boîtier 1 comportant un passage d'entrée de fluide 35 débouchant dans la périphérie de la chambre interne 22 et destiné à être relié à une source de fluide sous pression 36, le boîtier 1 comportant en outre un passage de retour 3, destiné à être relié au réservoir 18 et débouchant dans l'alésage étagé 28 entre le roulement 29 et le roulement axial 26 adjacent, le passage de retour 17 dans la pièce 5 communiquant avec l'alésage étagé 28 du boîtier 1.

Le ressort en C 40 assure l'accouplement à course morte entre les équipages arbre d'entrée 3-rotor 2/arbre de sortie 7-pièces 5 et 6. A cette fin, le ressort en C 40 comporte des zones d'extrémité en vis à vis, élargies axialement 400 définissant ainsi, outre les faces d'appui enregard 41, des zones d'appui arrières 42 s'étendant axialement de part et d'autre du corps du ressort 40 et susceptibles de coopérer en appui avec des surfaces de butée 61 formées sur les zones périphériques en saillie 60 de guidage et de maintien axial du ressort 40, ces faces de butée 61 étant normalement écartées d'un angle $\alpha$ des zones d'appui arrières 42 des extrémités élargies 400 du ressort 40 dans la configuration de repos centrée des éléments du distributeur. On notera que la zone intermédiaire à section triangulaire 30 de l'arbre d'entrée 3 est réduite. Cette zone intermédiaire 30 est directement prolongé par l'extrémité cylindrique de centrage 33.

Le fonctionnement du distributeur qui vient d'être décrit est le suivant dans la configuration normale de repos illustrée sur la Figure 2, le fluide sous pression en provenance de la source 36 remplit la cavité intérieure 22 autour des éléments de distributeur et pénètre, par les espaces entre deux bras adjacents 10 du rotor 2, dans les ouvertures de distribution 13, 13' non totalement occultées par les parties de voile 12 des bras 10 du rotor 2, et de là dans les lumières 11 des bras 2, d'où le fluide retourne au réservoir 18 par les ouvertures 16, les passages 17 et le conduit 37. Dans ces conditions, il ne se produit aucune différentielle de pression entre les deux chambres $V_1$ et $V_2$ du cylindre d'assistance. Si, par contre, le rotor 2 est décalé angulairement dans un sens ou dans un autre, par rapport à la position centrée de repos, par exemple vers la gauche sur la Figure 2, la restriction entre l'ouverture de distribution 13 de la partie de voile 12 se ferme tandis que la restriction entre l'ouverture de distribution 13' et la partie de voile 13 correspondante s'ouvre, ce qui a pour effet d'entraîner une différentielle de pression entre les chambres $V_1$ etr $V_2$ assistant le mouvement de rotation relatif provoqué par l'arbre d'entrée 3. Ce faisant, la saillie 100 du rotor provoque un écartement entre les faces en regard 41 du ressort, la cessation de l'effort sur l'arbre d'entrée 3 tendant à décaler angulairement le rotor 2 des pièces 5 et 6 amenant le ressort 40 à ramener les éléments de distributeur dans la configuration centrée de repos initiale.

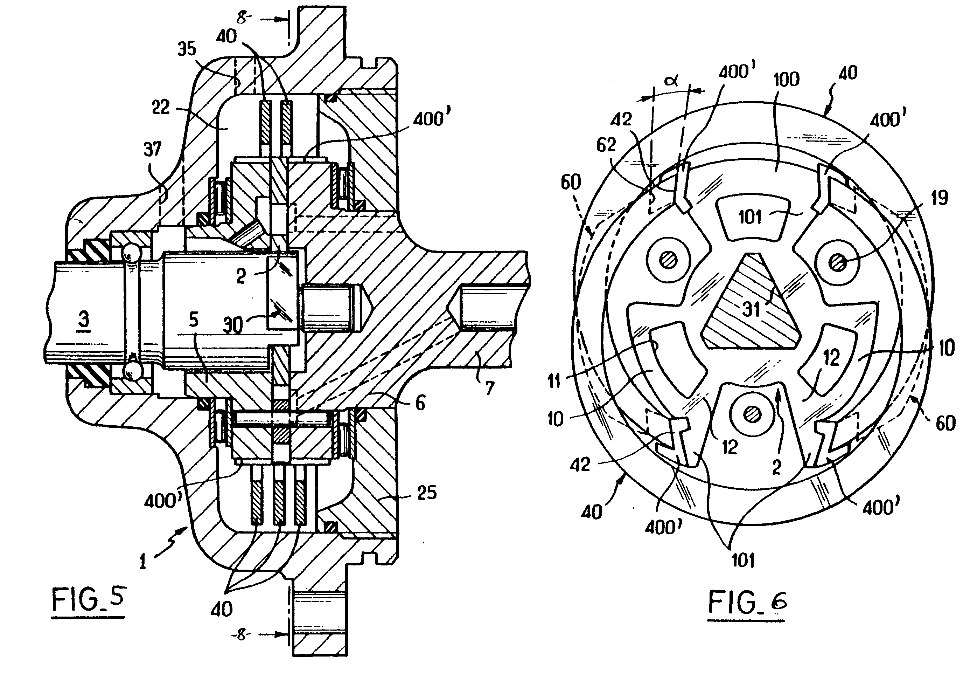

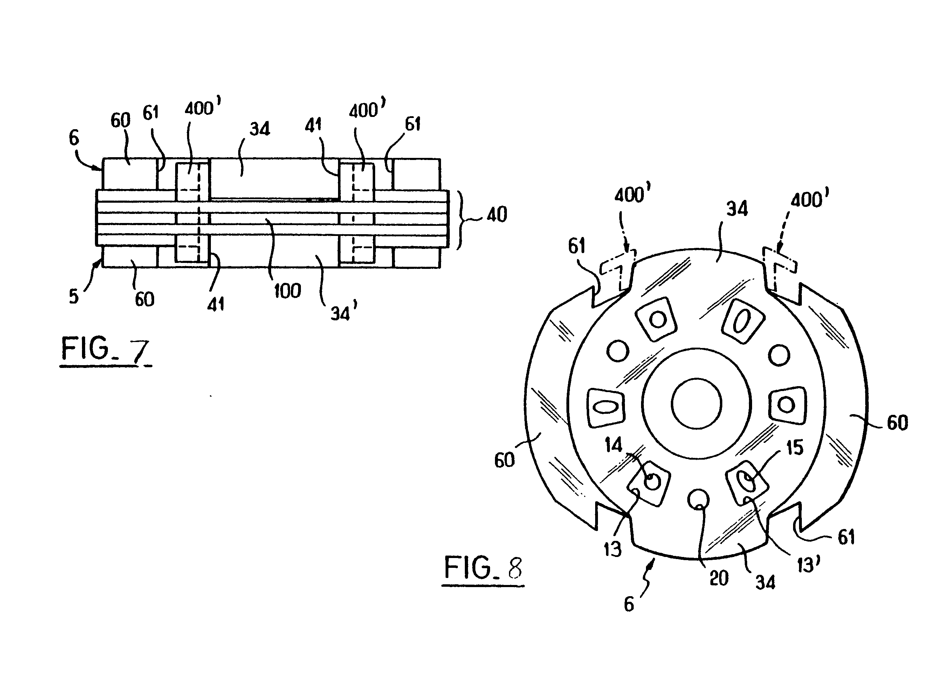

Le mode de réalisation des Figures 5 à 8 est à bien des égards similaires à celui qui vient d'être décrit en relation avec les Figures 1 à 4. Dans ce deuxième mode de réalisation les moyens élastiques de centrage réalisant également l'accouplement à course morte sont constitués au moyen d'au moins deux ressorts en C 40 disposés en opposition (c'est-à-dire avec l'interstice entre les extrémités opposées de l'un diamétralement opposé à l'interstice entre les extrémités opposées de l'autre). Typiquement, comme représenté sur la Figure 5, le dispositif comprend trois ressorts en t 40 dans un sens et deux ressorts en C 40 dans l'autre sens imbriqués entre les précédents. On notera que les ressorts 40 orientés dans une direction coopèrent avec les extrémités opposées de la partie en saillie 100 du bras $10_1$ comme dans les modes de réalisation précédents, tandis que les ressorts en opposition ont leurs extrémités coopérant, elles, avec deux parties en saillie 101 appartenant aux deux autres bras du rotor 2 mais ménageant entre leurs surfaces d'appui opposées sensiblement la même distance qu'entre les faces d'appui opposées de la saillie 100 du bras $10_1$. Dans ce mode de réalisation, les extrémités élargies formant zones d'appui du ressort unique du mode de réalisation des Figures 1 à 4 sont ici remplacées par des clavettes 400' à section transversale sensiblement en forme de S ou de Z interposées entre les faces d'appui des saillies 100 ou 101 des bras 10 du rotor 2 et les extrémités en regard des différents ressorts en C 40. De la même façon que précédemment, les clavettes 400' définissent, de part et d'autre, axialement, des ressorts en C, des secondes zones d'appui arrières 42 destinées à venir porter en appui contre les surfaces de butée 61 des pièces 6 et 5 en limitant ainsi la possibilité de rotation relative du rotor 2 vis à vis de ces pièces 5 et 6 à un angle $\alpha$. Le fonctionnement de ce mode de réalisation est en tout point identique à celui des modes de réalisation précédents.

Quoique la présente invention ait été décrite en relation avec des modes de réalisation particuliers, elle ne s'en trouve pas limitée mais est au contraire susceptible de modifications et de variantes qui apparaîtront à l'homme de métier, notamment en ce qui concerne le montage des éléments de distributeur et des arbres d'entrée dans le boîtier.

**Revendications**

1. Distributeur hydraulique, notamment pour système de direction assistée d'un véhicule automobile, comprenant, dans un boîtier (1, 25), un premier (2) et un second (5 - 6) éléments de valve rotatifs respectivement solidaires en rotation d'un arbre d'entrée (3) et d'un arbre de sortie (7) coaxiaux, les deux éléments de valve coopérant mutuellement pour former sélectivement des trajets de fluide entre une source de fluide sous pression (36), les compartiments respectifs ($V_1$, $V_2$) d'un moteur hydraulique d'assistance et un réservoir (18) en fonction de la position angulaire relative des deux éléments de valve de part et d'autre d'une position centrale de repos, le premier élément de valve étant constitué d'un rotor discoïdal en étoile (2) dont les bras sont formés avec des lumières (11) fermées périphériquement et délimitées chacune latéralement par des portions de voile sensiblement radiales (12) du bras correspondant, le rotor (2) coopérant en contact coulissant par ses faces axiales opposées avec des faces axiales adjacentes en vis à vis du second élément de valve (5 - 6), dans lesquelles débouchent, d'une part, au droit desdites portions de voile (12), des ouvertures de distribution (13, 13') destinées à être reliées aux compartiments ($V_1$, $V_2$) du moteur hydraulique, et d'autre part, au droit des lumières (11) des bras (10) du rotor (2), des ouvertures de retour (13) de fluide vers le réservoir, et un dispositif élastique de rappel et de centrage des arbres d'entrée et de sortie comprenant au moins un ressort en C (40) disposé autour de l'arbre d'entrée (3) et un premier et un second moyens de liaison associant respectivement les arbres d'entrée et de sortie aux extrémités en regard du ressort C, caractérisé en ce que le ressort en C (40) est disposé autour du rotor en étoile (2), le premier moyen de liaison étant constitué par une partie (100, 101) d'au moins un (10₁) des bras du rotor en étoile s'étendant radialement vers l'extérieur entre les extrémités en regard du ressort en C, le second moyen de liaison étant constitué par au moins une partie extérieure en saillie (34, 34') du deuxième élément de valve (5 - 6) s'étendant au voisinage du premier moyen de liaison, les extrémités du ressort en C (40) comportant des zones d'appui arrières (42) susceptibles de coopérer en appui avec des butées extérieures (61) du second élément de valve (6) pour réaliser un accouplement à course morte entre les premier (2) et second (5 - 6) éléments de valve.

2. Distributeur hydraulique selon la revendication 1, caractérisé en ce que les extrémités du ressord en C (40) comportent des zones d'appui (41, 42) s'étendant axialement de part et d'autre du ressort (40).

3. Distributeur hydraulique selon la revendication 2, caractérisé en ce que les zones d'appui (41, 42) sont formées d'une seule pièce (400) avec les extrémités en regard du ressort (40).

4. Distributeur hydraulique selon la revendication 2, caractérisé en ce que les zones d'appui (41, 42) comprennent de plus des clavettes (400') et les premier extrémités en regard du ressort (40) et les premier (100, 101) et second (34, 34') moyens de liaison.

5. Distributeur hydraulique selon l'une des revendications 1 à 4, caractérisé en ce que le second élément de valve est constitué de deux pièces (5, 6) concentriques espacées axialement et assemblées (19) pour être solidaires en rotation l'une de l'autre en définissant, entre leurs faces axiales en vis à vis, un espace dans lequel est reçu le rotor (2).

6. Distributeur hydraulique selon la revendication 5, caractérisé en ce que les deux pièces (5, 6) du second élément de valve sont accouplées en rotation par au moins un élément allongé (19) s'étendant axialement entre deux bras adjacents (10) du rotor (2).

7. Distributeur hydraulique selon l'une des revendications 5 et 6, caractérisé en ce que chaque pièce (5, 6) du second élément de valve comprend une partie extérieure en saillie (34, 34').

8. Distributeur hydraulique selon l'une des revendications 4 à 7, caractérisé en ce qu'il comporte au moins deux ressorts en C (40) disposés en opposition.

9. Distributeur hydraulique selon l'une des revendications 5 à 8, caractérisé en ce que les deux pièces (5, 6) du second élément de valve sont disposées entre deux parois frontales en regard (23, 24) du boîtier (1, 25) avec interposition de roulements axiaux (26).

10. Distributeur hydraulique selon la revendication 9, caractérisé en ce que le boîtier (1, 25) définit, entre les deux parois frontales (23, 24), une chambre intérieure (22) destinée à être reliée en permanence à la source de pression (36).


**Patentansprüche**

1. Hydraulischer Verteiler, insbesondere für die Servolenkanlage eines Kraftfahrzeuges, mit einem in einem Gehäuse (1, 25) angeordneten ersten (2) bzw. zweiten (5 - 6) Drehventiltörper, die mit einer Eingangswelle (3) und einer dazu koaxialen Ausgangswelle (7) drehfest verbunden sind, wobei die beiden Ventilkörper zusammenwirken, um wahlweise Strömungswege zwischen einer Druckmittelquelle (36), den entsprechenden Kammern ($V_1$, $V_2$) eines hydraulischen Servomotors und einem Reservoir (18) in Abhängigkeit von der relativen Winkelstellung der beiden Ventilkörper beidseitig zu einer zentralen Ruhestellung zu bilden, wobei der erste Ventilkörper von einem scheibenförmigen, sternförmigen Rotor (2) gebildet wird, dessen Arme mit am Umfang geschlossenen Schlitzen (11) versehen sind und seitlich von im wesentlichen radialen Flügelabschnitten (12) des entsprechenden Armes begrenzt werden, wobei der Rotor (2) an seinen axial gegenüberliegenden Stirnseiten in Gleitberührung mit den angrenzenden axialen Stirnseiten des zweiten Ventilkörpers (5 - 6) zusammenwirkt, in welchen einerseits an der Stelle der Flügelabschnitte (12) mit den Kammern ($V_1$, $V_2$) des hydraulischen Motors verbindbare Verteileröffnungen (13, 13') münden und andererseits an der Stelle der Schlitze (11) der Arme (10) des Rotors (2) Öffnungen (13) zum Rückführen des Strömungsmittels zum Reservoir münden, und eine elastische Vorrichtung zum Rückholen und Zentrieren der Eingangs- und Ausgangswelle mindestens eine C-förmige Feder (40) aufweist, die um die Eingangswelle (3) herum angeordnet ist, und ein erstes bzw. zweites Verbindungsmittel die Eingangswelle bzw. die Ausgangswelle den gegenüberliegenden Enden der C-förmigen Feder zuordnet, dadurch gekennzeichnet, daß die C-förmige Feder (40) um den stirnförmigen Rotor (2) herum angeordnet ist, wobei das erste Verbindungsmittel von einem Abschnitt (100, 101) mindestens eines (10₁) der Arme des sternförmigen Rotors gebildet wird, der sich radial nach außen zwischen die gegenüberliegenden Enden der C-förmigen Feder erstreckt, wobei das zweite Verbindungsmittel gebildet wird von mindestens einem nach außen vorstehenden Abschnitt (34, 34') des zweiten Ventilkörpers (5 - 6), der benachbart zu dem ersten Verbindungsmittel verläuft, wobei die Enden der C-förmigen Feder (40) rückwärtige Anlagebereiche (42) aufweisen, die mit äußeren Anschlägen (61) des zweiten Ventilkörpers (6) zusammenwirken, um eine Totgangverbindung zwischen dem ersten (2) und dem zweiten (5 - 6) Ventilkörper herzustellen.

2. Hydraulischer Verteiler nach Anspruch 1, dadurch gekennzeichnet, daß die Enden der C-förmigen Feder (40) Anlagebereiche (41, 42) aufweisen, die sich axial beidseitig zur Feder (40) erstrecken.

3. Hydraulischer Verteiler nach Anspruch 2, dadurch gekennzeichnet, daß die Anlagebereiche (41, 42) aus einem einzigen Teil (400) mit den gegenüberliegenden Enden der Feder (40) gebildet sind.

4. Hydraulischer Verteiler nach Anspruch 2, dadurch gekennzeichnet, daß die Anlagebereiche (41, 42) außerdem Keile (400') aufweisen, die zwischen den gegenüberliegenden Enden der Feder (40) und dem ersten (100, 101) sowie zweiten (34, 34') Verbindungsmittel eingefügt sind.

5. Hydraulischer Verteiler nach einem der Ansprüche 1 - 4, dadurch gekennzeichnet, daß der zweite Ventilkörper von zwei konzentrischen Teilen (5, 6) gebildet wird, die axial beabstandet und so zusammengefügt (19) sind, daß sie drehfest miteinander verbunden sind, wobei sie zwischen ihren einander zugewandten axialen Stirnseiten einen Raum bilden, in dem der Rotor (2) aufgenommen ist.

6. Hydraulischer Verteiler nach Anspruch 5, dadurch gekennzeichnet, daß die beiden Teile (5, 6) des zweiten Ventilkörpers durch mindestens ein längliches Element (19) drehfest gekuppelt sind, das sich axial zwischen zwei benachbarte Arme (10) des Rotors (2) erstreckt.

7. Hydraulischer Verteiler nach einem der Ansprüche 5 und 6, dadurch gekennzeichnet, daß jeder Teil (5, 6) des zweiten Ventilkörpers einen nach außen vorstehenden Abschnitt (34, 34') aufweist.

8. Hydraulischer Verteiler nach einem der Ansprüche 4 - 7, dadurch gekennzeichnet, daß er mindestens zwei C-förmige Federn (40) aufweist, die einander gegenüberliegend angeordnet sind.

9. Hydraulischer Verteiler nach einem der Ansprüche 5 - 8, dadurch gekennzeichnet, daß die beiden Teile (5 - 6) des zweiten Ventilkörpers zwischen zwei einander zugewandten Stirnwänden (23, 24) des Gehäuses (1, 25) unter Zwischenfügung von axialen Rollen (26) angeordnet sind.

10. Hydraulischer Verteiler nach Anspruch 9, dadurch gekennzeichnet, daß das Gehäuse (1, 25) zwischen den beiden Stirnwänden (23, 24) eine innere Kammer (22) bildet, die dauernd mit der Druckquelle (36) verbindbar ist.

## Claims

1. Hydraulic distributor, particularly for an assisted steering system of a motor vehicle, which comprises in a casing (1, 25) a first rotary valve portion (2) and a second rotary valve portion (5 - 6) fixed in rotation respectively to an input shaft (3) and an output shaft (7) which are coaxial, the two valve portions co-operating mutually so as to form fluid passages selectively between a source of fluid under pressure (36), the respective compartments ($V_1$, $V_2$) of a hydraulic assistance actuator and a reservoir (18) as a function of the relative angular position of the two valve portions on each side of a central rest position, the first valve portion consisting of a rotor in the form of a star-shaped disc (2) whose arms are formed with apertures (11) which are closed peripherally and each bounded laterally by masking portions which are essentially radial (12) of the corresponding arm, the rotor (2) cooperating in sliding contact by its opposite, axial surfaces with adjacent axial surfaces facing each other of the second valve portion (5 - 6), into which emerge, firstly, in line with the said masking portions (12), distribution openings (13, 13') intended to be connected to the compartments ($V_1$, $V_2$) of the hydraulic actuator, and secondly, in line with the apertures (11) of the arms (10) of the rotor (2), fluid return openings (13) towards the reservoir, and an elastic device for returning and for centering the input and output shafts incorporating at least one C-shaped spring (40) situated around the input shaft (3) and first and second connecting means joining the input and output shafts, respectively, to the ends facing each other of the spring C, characterized in that the C-shaped spring (40) is situated around a star-shaped rotor (2), the first connecting means consisting of a portion (100; 101) of at least one ($10_1$) of the arms of the star-shaped rotor extending radially outwards between the ends facing each other of the C-shaped spring, the second connecting means consisting of at least one external projecting portion (34, 34') of the second valve portion (5 - 6) lying in the region of the first connecting means, the ends of the C-shaped spring (40) incorporating rear bearing zones (42) capable of co-operating, as a support, with outer abutments (61) of the second value portion (6) to achieve a coupling with dead travel between the first (2) and second (5 - 6) value portions.

2. Hydraulic distributor according tio claim 1, characterized in that the ends of the C-shaped spring (40) incorporate bearing zones (41, 42) extending axially on each side of the spring.

3. Hydraulic distributor according to claim 2, characterized in that the bearing zones (41, 42) are formed as a single piece (400) with the ends which face each other of the spring (40).

4. Hydraulic distributor according to claim 2, characterized in that the bearing zones (41, 42) incorporate, in addition deys (400') interposed between the ends which face each other of the spring (40) and the first connecting means (100, 101) and the second connecting means (34, 34').

5. Hydraulic distributor according to one of claims 1 to 4, characterized in that the second valve portion consists of two concentric components (5, 6) which are axially spaced and are arranged (19) so as to be fixed in rotation to one another while defining a space, between their axial surfaces facing each other, in which the rotor (2) is housed.

6. Hydraulic distributor according to claim 5, characterized in that the two components (5, 6) of the second valve portion are coupled in rotation by at least one elongated portion (19) extending axially between two adjacent arms (10) of the rotor (2).

7. Hydraulic distributor according to one of the claims 5 or 6, characterized in that each component (5, 6) of the second value portion incorporates an external projecting portion (34, 34').

8. Hydraulic distributor according to one of claims 4 to 7, characterized in that it incorporates at least two C-shaped springs (40) situated in opposition.

9. Hydraulic distributor according to one of claims 5 to 8, characterized in that the two components (5 - 6) of the second valve portion are situated between two frontal walls which face each other (23, 24) of the casing (1, 25) with interposed axial bearings (26).

10. Hydraulic distributor according to claim 9, characterized in that the casing (1, 25) defines, between the two frontal walls (23, 24), an internal chamber (22) which is intended to be connected permanently to the source of pressure 36.

0 181 797

FIG_2

FIG_3

FIG_4

FIG_1

FIG. 5

FIG. 6

0 181 797

FIG. 8

FIG. 7